# EUROPÄISCHE PATENTSCHRIFT

(11) **EP 1 872 454 B1**
(45) Veröffentlichungstag und Bekanntmachung des Hinweises auf die Patenterteilung: **12.12.2012**
(21) Anmeldenummer: 06743323.5
(22) Anmeldetag: 18.04.2006
(51) Int. Cl.: H02H 7/16, H01G 9/00

(54) **ANORDNUNG MIT EINEM KONDENSATORMODUL UND VERFAHREN ZU DESSEN BETRIEB**
ARRANGEMENT COMPRISING A CAPACITOR MODULE, AND METHOD FOR THE OPERATION THEREOF
SYSTEME COMPRENANT UN MODULE DE CONDENSATEURS ET PROCEDE POUR FAIRE FONCTIONNER CE SYSTEME

(30) Priorität: 20.04.2005 DE 102005018339
(43) Veröffentlichungstag der Anmeldung: 02.01.2008
(73) Patentinhaber: SIEMENS AKTIENGESELLSCHAFT, 80333 München (DE)
(72) Erfinder: GAUDENZ, Markus Matthias, 91056 Erlangen (DE); HAHN, Alexander, 91341 Röttenbach (DE); RECHENBERG, Karsten, 91077 Dormitz (DE); WAIDHAS, Manfred, 90427 Nürnberg (DE)
(86) Internationale Anmeldenummer: PCT/EP2006/061642
(87) Internationale Veröffentlichungsnummer: WO 2006/111529

(56) Entgegenhaltungen:
- US-A- 5 073 751
- US-A1- 2004 150 926
- PATENT ABSTRACTS OF JAPAN Bd. 018, Nr. 595 (E-1630), 14. November 1994 (1994-11-14) & JP 06 225447 A (SHIZUKI DENKI SEISAKUSHO:KK), 12. August 1994 (1994-08-12)
- PATENT ABSTRACTS OF JAPAN Bd. 2002, Nr. 11, 6. November 2002 (2002-11-06) -& JP 2002 198271 A (KYOCERA CORP), 12. Juli 2002 (2002-07-12)
- PATENT ABSTRACTS OF JAPAN Bd. 1998, Nr. 11, 30. September 1998 (1998-09-30) & JP 10 174278 A (TOSHIBA CORP), 26. Juni 1998 (1998-06-26)
- PATENT ABSTRACTS OF JAPAN Bd. 1995, Nr. 03, 28. April 1995 (1995-04-28) -& JP 06 342024 A (OKAMURA KENKYUSHO:KK; others: 02), 13. Dezember 1994 (1994-12-13)
- PATENT ABSTRACTS OF JAPAN Bd. 003, Nr. 153 (E-159), 15. Dezember 1979 (1979-12-15) -& JP 54 133385 A (NIPPON TELEGR & TELEPH CORP <NTT>), 17. Oktober 1979 (1979-10-17)
- PATENT ABSTRACTS OF JAPAN Bd. 1996, Nr. 09, 30. September 1996 (1996-09-30) & JP 08 140257 A (TOSHIBA CORP), 31. Mai 1996 (1996-05-31)
- PATENT ABSTRACTS OF JAPAN Bd. 2002, Nr. 09, 4. September 2002 (2002-09-04) -& JP 2002 159135 A (NGK INSULATORS LTD), 31. Mai 2002 (2002-05-31)
- PATENT ABSTRACTS OF JAPAN Bd. 2003, Nr. 12, 5. Dezember 2003 (2003-12-05) & JP 2004 358984 A (RAILWAY TECHNICAL RES INST; MEIDENSHA CORP), 24. Dezember 2004 (2004-12-24)

## Beschreibung

Die Erfindung bezieht sich auf eine Anordnung mit einem Kondensatormodul mit zumindest einem Kondensator.

Doppelschichtkondensatoren mit Kapazitäten von maximal 1 Farad kamen in den 70'er Jahren auf den Markt und wurden beispielsweise von Firmen wie Matsushita, NEC oder NESS angeboten. Als in den Folgejahren Einzelzellen mit Kapazitäten über 1000 F verfügbar waren, wurde damit begonnen, Einzel-Kondensatoren mit hohen Kapazitäten zusammenzuschalten, um diese zur kurzzeitigen Bereitstellung hoher Leistungen zu verwenden. Für die meisten Anwendungen, z. B. für die Elektrotraktion, Unterwerke bei Schienenfahrzeugen etc., ist diese Verschaltung erforderlich, um sowohl den Leistungs- als auch den Spannungsanforderungen zu genügen. Eine solche Anordnverg ist

aus US 2004 / 150926 bekannt. Der Erfindung liegt die Aufgabe zugrunde, eine Anordnung mit einem Kondensatormodul anzugeben, die einen besonders sicheren Betrieb ermöglicht.

Diese Aufgabe wird ausgehend von einer Anordnung der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Danach ist erfindungsgemäß vorgesehen, dass die Anordnung eine mit dem zumindest einen Kondensator in Verbindung stehende Sicherheitseinrichtung aufweist, die den Betriebszustand des Kondensators und/oder den Betriebszustand des Kondensatormoduls überwacht und im Falle eines als unsicher vorgegebenen Betriebszustandes in einen Sicherheitsbetriebsmodus schaltet, wozu sie verbunden ist mit einer Strombegrenzungseinrichtung zur Begrenzung des strong der vom Kondensatormodul weg und zu ihn hin fließt.

Ein wesentlicher Vorteil der erfindungsgemäßen Anordnung ist darin zu sehen, dass bei dieser aufgrund des Vorhandenseins der Sicherheitseinrichtung unsichere Betriebszustände erkannt werden und das Kondensatormodul im Falle eines unsicheren Zustandes rechtzeitig um- oder ausgeschaltet wird. Durch den rechtzeitigen Übergang in einen Sicherheitsbetriebsmodus, bei dem das Modul beispielsweise abgeschaltet wird und/oder die darin enthaltenen Kondensatoren entladen werden, lässt sich vermeiden, dass es zu einer Schädigung oder Zerstörung des gesamten Kondensatormoduls kommen kann; außerdem wird vermieden, dass beispielsweise ein Brand auftreten kann, durch den weitere Anlagenteile beschädigt und/oder Menschen verletzt oder getötet werden könnten.

Unsichere Betriebszustände können beispielsweise daran erkannt werden, dass die maximal zulässige Zellenspannung und/oder der maximal zulässige Lade- oder Entladestrom und/oder die maximal zulässige Betriebstemperatur der Kondensatoren überschritten wird. Insbesondere bei gasdicht verschlossenen Doppelschichtkondensatormodulen sind zu hohe Temperaturen gefährlich, weil es zu einem Sieden und Entweichen des Elektrolyts und dadurch verursacht zu einem explosiven Abbrand des Kondensatormoduls kommen kann.

Weist das Kondensatormodul mehrere Kondensatoren auf, so stehen vorzugsweise alle Kondensatoren des Kondensatormoduls jeweils mit der Sicherheitseinrichtung in Verbindung und werden von dieser überwacht.

Die Sicherheitseinrichtung ist bevorzugt derart ausgestaltet, dass sie im Sicherheitsbetriebsmodus die Leistungsabgabe der Kondensatoren begrenzt. Beispielsweise schaltet sie die Kondensatoren elektrisch teilweise oder ganz ab, indem sie den Auflade- und/oder Entladestrom entsprechend reduziert.

Besonders bevorzugt werden die Kondensatoren während des Sicherheitsbetriebsmodus teilweise oder vollständig entladen. Das Entladen wird bei einem Einsatz des Kondensatormoduls in einem Schienenfahrzeug vorteilhaft mit einem Bremswiderstand des Schienenfahrzeugs durchgeführt, in den die elektrische Energie eingespeist wird. Alternativ kann die Energie auch in ein Bordnetz oder in Bordbatterien des Schienenfahrzeugs eingespeist werden.

Vorteilhafter Weise überwacht die Sicherheitseinrichtung die Temperatur im Inneren des Kondensatormoduls kontinuierlich und leitet bei Überschreiten einer vorgesehenen Maximaltemperatur den Sicherheitsbetriebsmodus ein. Bevorzugt wird die Temperatur auch im Inneren mindestens eines Kondensators des Kondensatormoduls, vorzugsweise im Inneren aller Kondensatoren des Kondensatormoduls, überwacht.

Alternativ oder zusätzlich kann die Sicherheitseinrichtung den Druck im Inneren des Kondensatormoduls überwachen und bei Überschreiten eines vorgegebenen Maximaldrucks den Sicherheitsbetriebsmodus auslösen. Bevorzugt überwacht die Sicherheitseinrichtung auch den Druck im Inneren mindestens eines Kondensators des Kondensatormoduls, vorzugsweise im Inneren aller Kondensatoren des Kondensatormoduls, kontinuierlich.

Die Sicherheitseinrichtung kann auch einen Sensor umfassen, der aus dem oder aus den Kondensatoren austretendes Elektrolyt erkennt und im Falle eines Elektrolytaustritts den Sicherheitsbetriebsmodus startet. Der Sensor kann beispielsweise ein Leitfähigkeitssensor, ein kapazitiver Sensor oder ein chemischer Sensor sein, der insbesondere auf einen im Elektrolyt enthaltenes Lösungsmittel in dampfförmiger oder flüssiger Form anspricht.

Vorteilhaft weist die Sicherheitseinrichtung eine die räumliche Ausdehnung bzw. Größe des oder der Kondensatoren messende Dehnmesseinrichtung auf; bei Überschreiten eines vorgegebenen Maximaldehnungsmesswertes wird der Sicherheitsbetriebsmodus gestartet.

Die Dehnmesseinrichtung weist bevorzugt für jeden Kondensator jeweils einen Dehnmessstreifen auf, der den Umfang des Kondensatorgehäuses des zugeordneten Kondensators umgreift. Besonders gute Messergebnisse werden erreicht, wenn die Dehnmessstreifen jeweils in halber Bauhöhe des jeweils zugeordneten Kondensatorgehäuses angeordnet sind.

Im Übrigen wird es als vorteilhaft angesehen, wenn die Sicherheitseinrichtung in regelmäßigen Abständen - beispielsweise einmal täglich - den Innenwiderstand und/oder die Kapazität des Kondensatormoduls ermittelt, die ermittelten Messwerte mit vorgegebenen Grenzwerten vergleicht und den Sicherheitsbetriebsmodus einleitet, wenn die Messwerte die vorgegebenen Grenzwerte überschreiten.

Bevorzugt vergleicht die Sicherheitseinrichtung die jeweils gemessenen Widerstands- und/oder Kapazitätswerte mit abgespeicherten Widerstands- und/oder Kapazitätswerten vorangegangener Betriebsperioden und ermittelt aus diesen Vergleichsergebnissen jeweils eine Kenngröße, die den technischen Zustand des Kondensatormoduls charakterisiert. Beispielsweise wird eine Kenngröße erzeugt, die den so genannten "state of health" des Kondensatormoduls angibt.

Vorzugsweise umfasst die Sicherheitseinrichtung zumindest ein Sicherheitsventil (z. B. Überdruckventil oder Berstvorrichtung), das sich im Falle eines Überdrucks innerhalb des Kondensatormoduls öffnet und somit ein Ablassen des Drucks ermöglicht.

Darüber hinaus kann die Sicherheitseinrichtung auch elektrische Leckströme der Kondensatoren messen und im Falle eines Überschreitens vorgegebener Grenzleckströme den Sicherheitsbetriebsmodus starten. Die Erfassung des Leckstromes wird bevorzugt am Ende jeder Betriebsphase als Teil des jeweiligen Abschaltvorganges und/oder in vorgegebenen Stand-by-Zeiten durchgeführt.

Vorteilhaft umfasst die Sicherheitseinrichtung eine Kurzschlusserfassungseinrichtung, die die Kondensatoren auf Vorliegen eines Kurzschlusses überwacht und im Falle eines Kurzschlusses den Sicherheitsbetriebsmodus startet. Die Kurzschlusserfassungseinrichtung führt die Kurzschlussüberwachung vorzugsweise jeweils am Ende einer jeden Betriebsphase als Teil des Abschaltprogramms und/oder in vorgegebenen Stand-by-Zeiten durch.

Außerdem kann das Kondensatormodul vorteilhaft eine Stand-by-Betriebsart aufweisen, in der die Modulspannung soweit abgesenkt wird, dass die einzelnen Zellenspannungen der im Modul enthaltenen Kondensatoren jeweils unter 2,2 V liegen. Alternativ können die Kondensatoren auch vollständig entladen werden.

Das elektrische Abtrennen der Kondensatoren während des Sicherheitsbetriebsmodus kann beispielsweise durch eine innerhalb des Kondensatormodulgehäuses oder außerhalb des Kondensatormodulgehäuses angeordnete Schaltvorrichtung erfolgen.

Die Sicherheitseinrichtung weist vorzugsweise eine Ausgabeeinrichtung auf, von der bei Vorliegen eines unsicheren Betriebszustandes ein akustisches und/oder optisches Warnsignal erzeugt wird. Das Warnsignal wird beispielsweise kondensatorindividuell, kondensatorgruppenindividuell oder modulbezogen erzeugt.

Im Übrigen kann die Sicherheitseinrichtung bei Erkennen eines Kurzschlusses auch die zulässige obere Spannungsgrenze des Kondensatormoduls reduzieren, um weitere Schäden zu vermeiden.

Vorzugsweise steht das Kondensatormodul mit einem Antriebsystem, insbesondere eines Schienenfahrzeugs, in Verbindung, um Fahrenergie des Antriebssystems zwischenzuspeichern.

Im Übrigen können auch mehrere Kondensatormodule in Reihe und/oder parallel geschaltet sein und von einer einzigen Sicherheitseinrichtung überwacht werden; alternativ können auch mehrere in Reihe und/oder parallel geschaltete Kondensatormodule jeweils von einer individuell zugeordneten Sicherheitseinrichtung überwacht werden.

Die Erfindung bezieht sich darüber hinaus auf ein Verfahren zum Betreiben eines Kondensatormoduls mit zumindest einem Kondensator. Um bei einem solchen Verfahren einen sicheren Betrieb des Kondensatormoduls zu ermöglichen, ist erfindungsgemäß vorgesehen, dass der Betriebszustand des Kondensators und/oder der des gesamten Kondensatormoduls überwacht wird und dass im Falle eines unsicheren Betriebszustandes in einen Sicherheitsbetriebsmodus geschaltet wird.

Bezüglich der Vorteile des erfindungsgemäßen Verfahrens wird auf die obigen Ausführungen im Zusammenhang mit der erfindungsgemäßen Anordnung verwiesen.

Die Erfindung wird nachfolgend anhand eines Ausführungsbeispiels erläutert. Dabei zeigen
- Figur 1: ein Ausführungsbeispiel einer erfindungsgemäßen Anordnung mit einem Kondensatormodul und einer Sicherheitseinrichtung und
- Figur 2: ein Blockschaltbild, an dem beispielhaft eine Ausführungsvariante eines Stand-by-Betriebs der Anordnung gemäß Figur 1 erläutert wird.

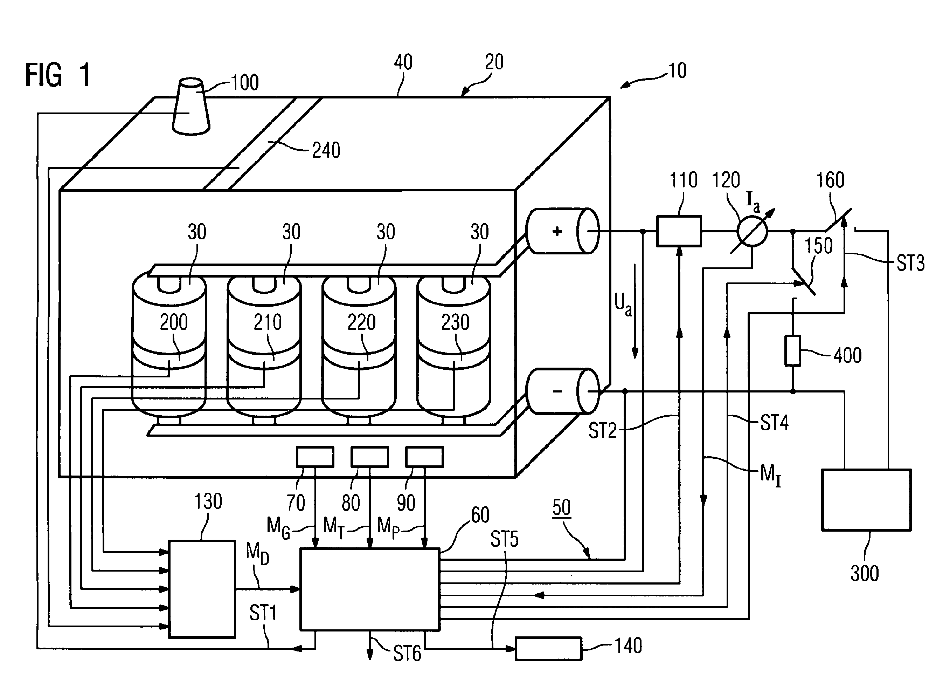

In der Figur 1 erkennt man eine Anordnung 10 mit einem Doppelschichtkondensatormodul 20, das gasdicht verschlossen ausgeführt ist. Das Doppelschichtkondensatormodul 20 weist vier elektrisch parallel geschaltete Doppelschicht-Kondensatoren 30 auf, die innerhalb eines Gehäuses 40 des Doppelschichtkondensatormoduls 20 angeordnet sind. Mit dem Doppelschichtkondensatormodul 20 steht eine Sicherheitseinrichtung 50 in Verbindung, die eine Vielzahl an Komponenten aufweist. So umfasst die Sicherheitseinrichtung 50 eine Steuereinrichtung 60, an die ein Gassensor 70, ein Temperatursensor 80, ein Drucksensor 90, ein Sicherheitsventil 100, eine Strombegrenzungseinrichtung 110, eine Strommesseinrichtung 120, eine Dehnmesseinrichtung 130, eine Anzeigeeinrichtung 140 sowie zwei Schalteinrichtungen 150 und 160 angeschlossen sind.

An die Dehnmesseinrichtung 130 sind insgesamt fünf Dehmessstreifen 200, 210, 220, 230 und 240 angeschlossen. Die Dehnmessstreifen 200 bis 230 sind jeweils an einem Gehäuse eines Doppelschicht-Kondensators 30 angebracht. Diese Dehnmessstreifen sind jeweils ungefähr in halber Bauhöhe des zugeordneten Kondensatorgehäuses derart angeordnet, dass sie das Kondensatorgehäuse ganz oder teilweise umfassen. Bei dem Ausführungsbeispiel gemäß der Figur 1 sind die Doppelschicht-Kondensatoren 30 jeweils zylinderförmig, so dass die Dehnmessstreifen 200 bis 230 die Doppelschicht-Kondensatoren 30 jeweils im Querschnitt kreisförmig umschließen.

Der fünfte Dehnmessstreifen 240 ist außen am Gehäuse 40 des Doppelschichtkondensatormoduls 20 angeordnet und dient dazu, die im Falle einer Erwärmung des Doppelschichtkondensatormoduls oder eines Überdrucks auftretende Ausdehnung des Gehäuses 40 messtechnisch zu erfassen. Die vier Dehnmessstreifen 200 bis 230 dienen dazu, eine im Falle einer Temperaturerhöhung oder eines Überdrucks der Doppelschicht-Kondensatoren 30 auftretende Ausdehnung der Gehäuse der Doppelschicht-Kondensatoren messtechnisch zu erfassen und die entsprechenden Messwerte an die zugeordnete Dehnmesseinrichtung 130 weiterzuleiten.

In der Figur 1 lässt sich außerdem ein Antriebssystem 300 eines Schienenfahrzeuges erkennen, das an das Doppelschichtkondensatormodul 20 angeschlossen ist. Das Doppelschichtkondensatormodul 20 dient dazu, die bei einem Abbremsen des Schienenfahrzeugs frei werdende kinetische Energie in Form elektrischer Energie zwischenzuspeichern und bei einem nachfolgenden Beschleunigungsvorgang des Schienenfahrzeuges zurück in das Antriebssystem 300 zurückzuspeisen.

Die Steuereinrichtung 60 ist derart ausgestaltet, dass sie den Betriebszustand des Doppelschichtkondensatormoduls 20 kontinuierlich überwacht. Hierzu misst sie mit dem Drucksensor 90 den Innendruck innerhalb des Gehäuses 40 des Doppelschichtkondensatormoduls 20. Falls der Innendruck einen zulässigen Maximaldruck überschreitet, erzeugt die Steuereinrichtung 60 ein Steuersignal ST1, mit dem sie das am Gehäuse 40 angebrachte Sicherheitsventil 100 öffnet und somit einen Druckausgleich ermöglicht.

Mit dem Gassensor 70, bei dem es sich beispielsweise um einen Leitfähigkeitssensor, einen kapazitiven Sensor oder einen chemischen Sensor handelt und der z. B. auf ein im Elektrolyt der Doppelschicht-Kondensatoren 30 enthaltenes Lösungsmittel in dampfförmiger oder flüssiger Form anspricht, wird gemessen, ob Elektrolyt aus den Doppelschicht-Kondensatoren 30 austritt. Falls dies der Fall ist, wird das Doppelschichtkondensatormodul 20 in einen Sicherheitsbetriebmodus umgeschaltet.

Der Sicherheitsbetriebsmodus kann derart ausgestaltet sein, dass das Doppelschichtkondensatormodul 20 vollständig abgeschaltet wird. Alternativ kann auch nur die Leistungsentnahme aus dem Doppelschichtkondensatormodul reduziert werden, um die Belastung der Doppelschicht-Kondensatoren innerhalb des Doppelschichtkondensatormoduls zu reduzieren.

Mit dem Temperatursensor 80 misst die Steuereinrichtung 60 kontinuierlich die Temperatur im Inneren des Doppelschichtkondensatormoduls 20 und stellt so fest, ob es zu einer Überlastung der Doppelschicht-Kondensatoren 30 kommt; denn eine Überlastung der Doppelschicht-Kondensatoren 30 würde sich in einer Temperaturerhöhung niederschlagen. Falls ein Temperaturmesswert M_{T} einen in der Steuereinrichtung 60 vorgegebenen Maximaltemperaturwert TmAx überschreitet, wird das Doppelschichtkondensatormodul 20 in den bereits beschriebenen Sicherheitsbetriebsmodus umgeschaltet.

Die Steuereinrichtung 60 arbeitet darüber hinaus mit der Dehmesseinrichtung 130 zusammen, die mit den Dehnmessstreifen 200 bis 240 in Verbindung steht. Stellt die Dehnmesseinrichtung 130 fest, dass es zu einer Ausdehnung der Gehäuse der Doppelschicht-Kondensatoren 30 oder zu einer Ausdehnung des Gehäuses 40 des Doppelschichtkondensatormoduls 20 gekommen ist und dass diese Ausdehnung vorgegebene Grenzwerte überschreitet, so erzeugt die Dehnmesseinrichtung 130 ein entsprechendes Messsignal M_{D} und übermittelt dieses an die Steuereinrichtung 60. Die Steuereinrichtung 60 schaltet bei Vorliegen des entsprechenden Signals M_{D} das Doppelschichtkondensatormodul 20 in den bereits beschriebenen Sicherheitsbetriebsmodus.

Die Steuereinrichtung 60 misst darüber hinaus die Ausgangsspannung Uₐ des Doppelschichtkondensatormoduls 20 sowie mit Hilfe der Strommesseinrichtung 120 den jeweiligen Strom Iₐ, der im Falle eines Entladevorgangs aus dem Doppelschichtkondensatormodul 20 herausfließt und im Falle eines Aufladevorgangs in das Doppelschichtkondensatormodul 20 hineinfließt. Stellt die Steuereinrichtung 60 dabei fest, dass der Strom Iₐ einen vorgegebenen Maximalstrom überschreitet und/oder dass die Ausgangsspannung Uₐ des Doppelschichtkondensatormoduls 20 eine zulässige Maximalspannung überschreitet, so schaltet sie das Doppelschichtkondensatormodul ebenfalls in den bereits erwähnten Sicherheitsbetriebsmodus.

Das Umschalten des Doppelschichtkondensatormoduls 20 in den Sicherheitsbetriebsmodus bewerkstelligt die Steuereinrichtung 60 mit Hilfe der Strombegrenzungseinrichtung 110 über das Steuersignal ST2 und/oder mit Hilfe der beiden Schalteinrichtungen 150 und 160 über die Steuersignale ST3 und ST4. Die Strombegrenzungseinrichtung 110 kann beispielsweise durch eine Transistorschaltung oder dergleichen gebildet sein.

Falls die für einen Normalbetrieb des Doppelschichtkondensatormoduls zulässigen Betriebsparameter nur geringfügig überschritten sind und ein Weiterbetrieb des Doppelschichtkondensatormoduls 20 mit einer geringeren Belastung noch möglich ist, so steuert die Steuereinrichtung 60 die Strombegrenzungseinrichtung 110 derart an, dass der aus dem Doppelschichtkondensatormodul 20 heraus- bzw. hineinfließende Strom Iₐ einen vorgegebenen, reduzierten Maximalstrom nicht überschreitet. Das Doppelschichtkondensatormodul 20 wird somit mit reduzierter Leistung weiter betrieben, so dass die Wahrscheinlichkeit dafür, dass es zu einer Beschädigung oder zu einem vollständigen Ausfall des Doppelschichtkondensatormoduls kommt, deutlich reduziert wird.

Stellt die Steuereinrichtung 60 hingegen fest, dass die Betriebsparameter einen derart kritischen Bereich erreicht oder überschritten haben, in dem ein sicheres Weiterbetreiben des Doppelschichtkondensatormoduls 20 nicht mehr sichergestellt ist, so schaltet sie das Doppelschichtkondensatormodul 20 vollständig ab, indem es die Schalteinrichtung 160 öffnet. Durch das Öffnen der Schalteinrichtung 160 ist das Doppelschichtkondensatormodul 20 von dem Antriebssystem 300 des Schienenfahrzeugs abgekoppelt, und damit abgeschaltet. Um die in dem Doppelschichtkondensatormodul 20 noch abgespeicherte Energie abzubauen, kann die Steuereinrichtung 60 die Schalteinrichtung 150 einschalten, so dass ein Entladestrom über einen Entladewiderstand 400 abfließen kann. Der Entladewiderstand 400 kann durch unterschiedliche Komponenten gebildet sein und ist hier nur "schematisch" als einfacher Widerstand dargestellt. Der Entladewiderstand 400 kann beispielsweise durch ein Bordnetz oder Bordbatterien des Schienenfahrzeugs gebildet sein; alternativ kann der Entladewiderstand 400 auch durch einen Bremswiderstand der Antriebseinrichtung 300 realisiert sein und somit einen Bestandteil der Antriebseinrichtung 300 bilden.

Im Falle eines Umschaltens in den Sicherheitsbetriebsmodus wird dies in der Anzeigeeinrichtung 140 akustisch und/oder optisch angezeigt, sobald die Steuereinrichtung 60 ein entsprechendes Steuersignal ST5 erzeugt. Diese Anzeige kann beispielsweise sehr pauschal sein, und lediglich das Umschalten in den Sicherheitsbetriebsmodus anzeigen. Alternativ kann die Anzeigeeinrichtung 140 auch detailliert anzeigen, welcher der Doppelschicht-Kondensatoren 30 von einem Fehler betroffen ist, sofern dies messtechnisch identifiziert wurde; bei dem Ausführungsbeispiel gemäß der Figur 1 wäre eine solche Identifizierung eines Fehlers beispielsweise über die entsprechenden Dehnungsmessstreifen 200 bis 230 möglich, die sich individuell jeweils auf einen einzelnen Doppelschicht-Kondensator 30 beziehen. Die Anzeige des im Doppelschichtkondensatormodul 20 aufgetretenen Fehlers kann somit einzelteilbezogen, strangbezogen oder modulbezogen erfolgen.

Im Übrigen ist es vorteilhaft, wenn die Steuereinrichtung 60 in regelmäßigen Abständen - beispielsweise einmal täglich - den Innenwiderstand und/oder die Kapazität des Kondensatormoduls 20 ermittelt, die ermittelten Messwerte mit vorgegebenen Grenzwerten vergleicht und den Sicherheitsbetriebsmodus einleitet, wenn die Messwerte die vorgegebenen Grenzwerte überschreiten.

Außerdem kann die Steuereinrichtung 60 die jeweils gemessenen Widerstands- und/oder Kapazitätswerte mit abgespeicherten Widerstands- und/oder Kapazitätswerten vorangegangener Betriebsperioden vergleichen und daraus eine Kenngröße, die den technischen Zustand des Kondensatormoduls 20 charakterisiert, ermitteln. Beispielsweise wird eine "state of health"-Kenngröße erzeugt, die als Steuersignal ST6 abgegeben wird.

Die Steuereinrichtung 60 kann beispielsweise durch eine Mikroprozessoranordnung gebildet sein, in der die eingehenden Messwerte datenverarbeitungstechnisch ausgewertet und ausgangsseitig die erläuterten Steuersignale ST1 bis ST6 erzeugt werden.

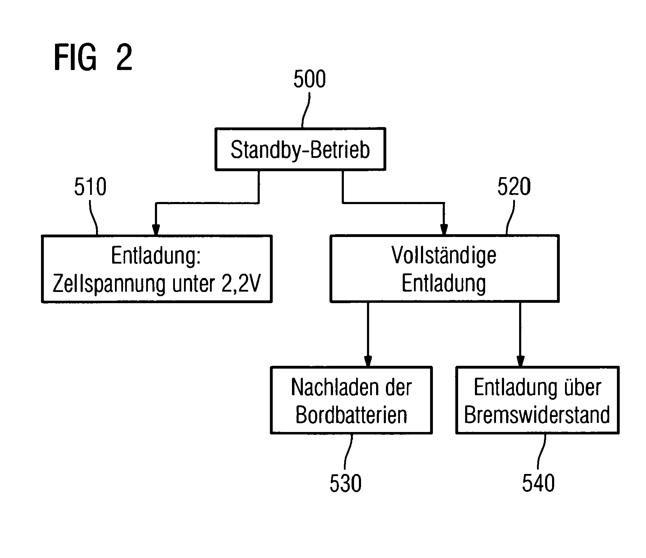

In der Figur 2 ist ein Blockschaltbild gezeigt, an dem beispielhaft eine Ausführungsvariante eines Stand-by-Betriebs der Anordnung 10 gemäß Figur 1 erläutert wird.

Sobald die Anordnung 10 in einen Stand-by-Betrieb 500 schaltet, sei dies im Rahmen eines "routinemäßigen" oder periodischen Stand-by-Betriebs oder im Rahmen des oben erläuterten Sicherheitsbetriebsmodus, so sind bei dem Ausführungsbeispiel gemäß Figur 2 zwei unterschiedliche Verfahrensvarianten vorgesehen.

Gemäß einer ersten Variante 510 werden nach einem Unterbrechen der Schalteinrichtung 160 die Doppelschicht-Kondensatoren 30 soweit entladen, dass ihre Zellspannung 2,2 Volt unterschreitet; es verbleibt in den Kondensatoren jedoch eine Restladung.

Gemäß einer zweiten Variante 520 werden nach einem Unterbrechen der Schalteinrichtung 160 die Doppelschicht-Kondensatoren 30 vollständig entladen; es verbleibt in den Kondensatoren somit quasi keine Restladung. Das Entladen kann über die Bordbatterien des Schienenfahrzeugs (Untervariante 530) oder über einen Bremswiderstand des Schienenfahrzeugs (Untervariante 540) erfolgen.

Welche der Varianten 510 oder 520 bzw. welche der Untervarianten 530 oder 540 gewählt wird, ist weitgehend beliebig; im Falle eines Störfalls sind jedoch die vorliegenden Betriebsparameter und das gewünschte, zu erreichende Sicherheitsniveau zu berücksichtigen: Werden die Doppelschicht-Kondensatoren 30 vollständig entladen, wird ein "sicherer" Zustand eingestellt als im Falle des Verbleibens einer Restladung.

## Patentansprüche

1. Anordnung (10) mit einem Kondensatormodul (20) mit zumindest einem Kondensator (30), wobei die Anordnung eine mit dem zumindest einen Kondensator in Verbindung stehende Sicherheitseinrichtung (50) aufweist, die den Betriebszustand des Kondensators (30) oder den Betriebszustand des Kondensatormoduls (20) überwacht und im Falle eines als unsicher erkannten Betriebszustandes einen Schaltvorgang auslöst, **dadurch gekennzeichnet, dass** die Sicherheitseinrichtung (50) dabei in einen Sicherheitsbetriebsmodus schaltet, wozu sie verbunden ist mit einer Strombegrenzungseinrichtung (110) zur Begrenzung des Stroms, der vom Kondensatormodul (20) weg und zu ihm hin fließt.

2. Anordnung nach Anspruch 1, **dadurch gekennzeichnet**, das s die Sicherheitseinrichtung derart ausgestaltet ist, dass sie im Sicherheitsbetriebsmodus die Leistungsabgabe des Kondensators begrenzt.

3. Anordnung nach Anspruch 1, **dadurch gekennzeichnet, dass** die Sicherheitseinrichtung derart ausgestaltet ist, dass sie im Sicherheitsbetriebsmodus den Kondensator elektrisch abgekoppelt.

4. Kondensatormodul nach Anspruch 3, **dadurch gekennzeichnet, dass** der Kondensator während des Sicherheitsbetriebsmodus vollständig entladen wird.

5. Anordnung nach einem der voranstehenden Ansprüche, **dadurch gekennzeichnet, dass** das Kondensatormodul mit einem Antriebsystem (300), insbesondere eines Schienenfahrzeugs, in Verbindung steht.

6. Anordnung nach einem der voranstehenden Ansprüche, **dadurch gekennzeichnet, dass** das Kondensatormodul mehrere Kondensatoren (30) aufweist, die jeweils mit der Sicherheitseinrichtung in Verbindung stehen und von dieser überwacht werden.

7. Anordnung nach einem der voranstehenden Ansprüche, **dadurch gekennzeichnet, dass** das Kondensatormodul ein Doppelschichtkondensatormodul ist und die darin enthaltenden Kondensatoren Doppelschichtkondensatoren sind.

8. Anordnung nach einem der voranstehenden Ansprüche, **dadurch gekennzeichnet, dass** das Doppelschichtkondensatormodul ein gasdicht verschlossenes Modul ist.

9. Anordnung nach einem der voranstehenden Ansprüche, **dadurch gekennzeichnet, dass** die Sicherheitseinrichtung die Temperatur im Inneren des Kondensatormoduls kontinuierlich überwacht und bei Überschreiten einer vorgesehenen Maximaltemperatur den Sicherheitsbetriebsmodus einleitet.

10. Anordnung nach Anspruch 9, **dadurch gekennzeichnet, dass** die Sicherheitseinrichtung die Temperatur im Inneren mindestens eines Kondensators des Kondensatormoduls, vorzugsweise im Inneren aller Kondensatoren des Kondensatormoduls, überwacht und bei Überschreiten einer vorgesehenen Maximaltemperatur den Sicherheitsbetriebsmodus einleitet.

11. Anordnung nach einem der voranstehenden Ansprüche, **dadurch gekennzeichnet, dass** die Sicherheitseinrichtung den Druck im Inneren des Kondensatormoduls überwacht und bei Überschreiten eines vorgegebenen Maximaldrucks den Sicherheitsbetriebsmodus auslöst.

12. Anordnung nach Anspruch 11, **dadurch gekennzeichnet, dass die** Sicherheitseinrichtung den Druck im Inneren mindestens eines Kondensators des Kondensatormoduls, vorzugsweise im Inneren aller Kondensatoren des Kondensatormoduls, kontinuierlich überwacht und bei Überschreiten eines vorgegebenen Maximaldrucks den Sicherheitsbetriebsmodus auslöst.

13. Anordnung nach einem der voranstehenden Ansprüche, **dadurch gekennzeichnet, dass** die Sicherheitseinrichtung einen Sensor umfasst (70), der aus dem zumindest einen Kondensator austretendes Elektrolyt erkennt und im Falle eines Elektrolytaustritts den Sicherheitsbetriebsmodus startet.

14. Anordnung nach Anspruch 13, **dadurch gekennzeichnet, dass** der Sensor ein Leitfähigkeitssensor, ein kapazitiver Sensor oder ein chemischer Sensor ist, der insbesondere auf einen im Elektrolyt enthaltenes Lösungsmittel in dampfförmiger oder flüssiger Form anspricht.

15. Anordnung nach einem der voranstehenden Ansprüche, **dadurch gekennzeichnet, dass** die Sicherheitseinrichtung eine die räumliche Ausdehnung des zumindest einen Kondensators oder die räumliche Ausdehnung des Kondensatormoduls messende Dehnmesseinrichtung (130) aufweist und die Sicherheitseinrichtung derart ausgestaltet ist, dass sie bei Überschreiten eines vorgegebenen Maximaldehnungsmesswertes den Sicherheitsbetriebsmodus startet.

16. Anordnung nach Anspruch 15, **dadurch gekennzeichnet, dass** die Dehnmesseinrichtung an zumindest einen Dehnmessstreifen (200-230) angeschlossen ist, der das Kondensatorgehäuse des zugeordneten Kondensators vollständig umgreift.

17. Anordnung nach Anspruch 16, **dadurch gekennzeichnet, dass** die Dehnmesseinrichtung für jeden Kondensator des Kondensatormoduls jeweils zumindest einen Dehnmessstreifen umfasst.

18. Anordnung nach Anspruch 16 oder 17, **dadurch gekennzeichnet, dass** die Dehnmessstreifen jeweils in halber Bauhöhe des jeweils zugeordneten Kondensatorgehäuses angeordnet sind.

19. Anordnung nach einem der voranstehenden Ansprüche, **dadurch gekennzeichnet, dass** die Sicherheitseinrichtung in regelmäßigen Abständen den Innenwiderstand und/oder die Kapazität des Kondensatormoduls ermittelt, diese mit vorgegebenen Grenzwerten vergleicht und den Sicherheitsbetriebsmodus einleitet, wenn die Messwerte die vorgegebenen Grenzwerte überschreiten.

20. Anordnung nach Anspruch 19, **dadurch gekennzeichnet, dass die** Sicherheitseinrichtung die jeweils gemessenen Widerstands- und/oder Kapazitätswerte mit abgespeicherten Widerstands- und/oder Kapazitätswerten vorangegangener Betriebsperioden vergleicht und aus diesem Vergleichsergebnis eine Kenngröße (ST6) ermittelt, die den technischen Zustand des Kondensatormoduls charakterisiert.

21. Anordnung nach Anspruch 20, **dadurch gekennzeichnet, da s s** die Sicherheitseinrichtung eine Kenngröße erzeugt, die den "state of health" des Kondensatormoduls angibt.

22. Anordnung nach einem der voranstehenden Ansprüche, **dadurch gekennzeichnet, dass** die Sicherheitseinrichtung zumindest ein Sicherheitsventil (100) umfasst, das sie im Falle eines Überdrucks innerhalb des Kondensatormoduls öffnet.

23. Anordnung nach einem der voranstehenden Ansprüche, **dadurch gekennzeichnet, dass** die Sicherheitseinrichtung elektrische Leckströme der Kondensatoren misst und im Falle des Überschreitens vorgegebener Grenzleckströme den Sicherheitsbetriebsmodus startet.

24. Anordnung nach Anspruch 23, **dadurch gekennzeichnet, dass** die Sicherheitseinrichtung die Erfassung des Leckstromes am Ende jeder Betriebsphase als Teil des jeweiligen Abschaltvorganges und/oder in vorgegebenen Stand-by-Zeiten durchführt.

25. Anordnung nach einem der voranstehenden Ansprüche, **dadurch gekennzeichnet, dass** die Sicherheitseinrichtung eine Kurzschlusserfassungseinrichtung umfasst, die die Kondensatoren auf Vorliegen eines Kurzschlusses überwacht und im Falle eines Kurzschlusses den Sicherheitsbetriebsmodus startet.

26. Anordnung nach Anspruch 25, **dadurch gekennzeichnet, dass** die Kurzschlusserfassungseinrichtung die Kurzschlussüberwachung jeweils am Ende einer jeden Betriebsphase als Teil des Abschaltprogramms und/oder in vorgegebenen Stand-by-Zeiten durchführt.

27. Anordnung nach einem der voranstehenden Ansprüche, **dadurch gekennzeichnet, dass** das Kondensatormodul eine Stand-by-Betriebsart aufweist, in der die Modulspannung soweit abgesenkt wird, dass die einzelnen Zellspannungen der im Modul enthaltenen Kondensatoren jeweils unter 2,2 V liegen.

28. Anordnung nach einem der voranstehenden Ansprüche, **dadurch gekennzeichnet, dass** die Sicherheitseinrichtung bei Vorliegen des Sicherheitsbetriebsmodus die Kondensatoren durch eine innerhalb des Kondensatormodulgehäuses oder außerhalb des Kondensatormodulgehäuses angeordnete Schaltvorrichtung (160) elektrisch abtrennt.

29. Anordnung dach einem der voranstehenden Ansprüche, **dadurch gekennzeichnet, dass** die Sicherheitseinrichtung eine Ausgabeeinrichtung (140) umfasst, von der bei Vorliegen eines unsicheren Betriebszustandes ein akustisches und/oder optisches Warnsignal erzeugt wird.

30. Anordnung nach Anspruch 29 , **dadurch gekennzeichnet, dass** das Warnsignal kondensatorindividuell, kondensatorgruppenindividuell oder modulbezogen erzeugt wird.

31. Anordnung nach einem der vorstehenden Ansprüche, **dadurch gekennzeichnet, dass** die Sicherheitseinrichtung bei Erkennen eines Kurzschlusses die zulässige obere Spannungsgrenze des Kondensatormoduls reduziert.

32. Anordnung nach einem der vorstehenden Ansprüche, **dadurch gekennzeichnet, dass** die Energie beim Entladen der Kondensatoren in einen Bremswiderstand (400) der Antriebseinrichtung (300) eingespeist wird.

33. Anordnung nach einem der vorstehenden Ansprüche 1 bis 31, **dadurch gekennzeichnet, dass** die Energie beim Entladen der Kondensatoren zum Nachladen von Bordbatterien des Schienenfahrzeuges genutzt wird.

34. Anordnung nach einem der vorstehenden Ansprüche, **dadurch gekennzeichnet, dass** mehrere kondensatormodule in Reihe und/oder parallel geschaltet sind und von der Sicherheitseinrichtung (50) überwacht werden.

35. Anordnung nach einem der vorstehenden Ansprüche 1 bis 33, **dadurch gekennzeichnet, dass** mehrere Kondensatormodule in Reihe und/oder parallel geschaltet sind und jeweils von einer individuell zugeordneten Sicherheitseinrichtung überwacht werden.

36. Verfahren zum Betreiben eines Kondensatormoduls (20) mit zumindest einem Kondensator (30), wobei der Betriebszustand des Kondensators (30) oder der Betriebszustand des Kondensatormoduls (20) überwacht wird und im Falle eines als unsicher erkannten Betriebszustandes ein Schaltvorgang ausgelöst wird, **dadurch gekennzeichnet, dass** das Kondensatormodul in einen Sicherheitsbetriebsmodus geschaltet wird, in dem der Strom, der vom Kondensatormodul (20) weg und zu ihm hin fließt, begrenzt wird.

## Claims

1. Arrangement (10) comprising a capacitor module (20) having at least one capacitor (30), wherein the arrangement has a safety device (50) which is connected to the at least one capacitor and which monitors the operating condition of the capacitor (30) or the operating condition of the capacitor module (20) and triggers a switching action if an unsafe operating condition is detected, **characterised in that in that** event the safety device (50) switches to a safety mode of operation, for which purpose it is connected to a current-limiting device (110) for limiting the current that flows away from and to the capacitor module (20).

2. Arrangement according to claim 1, **characterised in that** the safety device is embodied in such a way that in the safety mode of operation it limits the power output of the capacitor.

3. Arrangement according to claim 1, **characterised in that** the safety device is embodied in such a way that in the safety mode of operation it electrically decouples the capacitor.

4. Capacitor module according to claim 3, **characterised in that** the capacitor is discharged completely during the safety mode of operation.

5. Arrangement according to one of the preceding claims, **characterised in that** the capacitor module is connected to a drive system (300), in particular a rail vehicle.

6. Arrangement according to one of the preceding claims, **characterised in that** the capacitor module has a plurality of capacitors (30), each of which is connected to the safety device and is monitored by the same.

7. Arrangement according to one of the preceding claims, **characterised in that** the capacitor module is a double-layer capacitor module and the capacitors contained therein are double-layer capacitors.

8. Arrangement according to one of the preceding claims, **characterised in that** the double-layer capacitor module is a gas-tight sealed module.

9. Arrangement according to one of the preceding claims, **characterised in that** the safety device continuously monitors the temperature in the interior of the capacitor module and initiates the safety mode of operation if a predetermined maximum temperature is exceeded.

10. Arrangement according to claim 9, **characterised in that** the safety device monitors the temperature in the interior of at least one capacitor of the capacitor module, preferably in the interior of all of the capacitors of the capacitor module, and initiates the safety mode of operation if a predetermined maximum temperature is exceeded.

11. Arrangement according to one of the preceding claims, **characterised in that** the safety device monitors the pressure in the interior of the capacitor module and triggers the safety mode of operation if a predetermined maximum pressure is exceeded.

12. Arrangement according to claim 11, **characterised in that** the safety device continuously monitors the pressure in the interior of at least one capacitor of the capacitor module, preferably in the interior of all of the capacitors of the capacitor module, and triggers the safety mode of operation if a predetermined maximum pressure is exceeded.

13. Arrangement according to one of the preceding claims, **characterised in that** the safety device comprises a sensor (70) which detects electrolyte escaping from the at least one capacitor and starts the safety mode of operation in the event of an escape of electrolyte.

14. Arrangement according to claim 13, **characterised in that** the sensor is a conductivity sensor, a capacitive sensor or a chemical sensor which operates in particular in response to a solvent contained in the electrolyte in vaporous or liquid form.

15. Arrangement according to one of the preceding claims, **characterised in that** the safety device has a strain measuring device (130) measuring the spatial expansion of the at least one capacitor or the spatial expansion of the capacitor module and **in that** the safety device is embodied in such a way that it starts the safety mode of operation if a predetermined maximum expansion measured value is exceeded.

16. Arrangement according to claim 15, **characterised in that** the strain measuring device is connected to at least one strain gauge (200-230) which completely encompasses the capacitor housing of the associated capacitor.

17. Arrangement according to claim 16, **characterised in that** the strain measuring device includes at least one strain gauge in each case for each capacitor of the capacitor module.

18. Arrangement according to claim 16 or 17, **characterised in that** the strain gauges are in each case arranged at half the installation height of the respective associated capacitor housing.

19. Arrangement according to one of the preceding claims, **characterised in that** the safety device determines the internal resistance and/or the capacitance of the capacitor module at regular intervals, compares the same with predetermined limit values and initiates the safety mode of operation if the measured values exceed the predetermined limit values.

20. Arrangement according to claim 19, **characterised in that** the safety device compares the resistance and/or capacitance values measured in each case with stored resistance and/or capacitance values of preceding periods of operation and from the result of said comparison determines a parameter (ST6) which characterises the technical condition of the capacitor module.

21. Arrangement according to claim 20, **characterised in that** the safety device generates a parameter which indicates the state of health of the capacitor module.

22. Arrangement according to one of the preceding claims, **characterised in that** the safety device comprises at least one safety valve (100) which it opens in the event of excess pressure inside the capacitor module.

23. Arrangement according to one of the preceding claims, **characterised in that** the safety device measures electrical leakage currents of the capacitors and starts the safety mode of operation if predetermined limit leakage currents are exceeded.

24. Arrangement according to claim 23, **characterised in that** the safety device takes a measurement of the leakage current at the end of each phase of operation as part of the respective shutdown process and/or at predetermined standby times.

25. Arrangement according to one of the preceding claims, **characterised in that** the safety device comprises a short-circuit sensing device which monitors the capacitors for the presence of a short circuit and starts the safety mode of operation in the event of a short circuit.

26. Arrangement according to claim 25, **characterised in that** the short-circuit sensing device in each case performs the short-circuit monitoring at the end of each phase of operation as part of the shutdown programme and/or at predetermined standby times.

27. Arrangement according to one of the preceding claims, **characterised in that** the capacitor module has a standby mode of operation in which the module voltage is lowered to such a degree that the individual cell voltages of the capacitors contained in the module in each case lie below 2.2 V.

28. Arrangement according to one of the preceding claims, **characterised in that** when the safety mode of operation is present the safety device electrically isolates the capacitors by means of a switching device (160) arranged inside the capacitor module housing or outside the capacitor module housing.

29. Arrangement according to one of the preceding claims, **characterised in that** the safety device comprises an output device (140) by which an audible and/or visual warning signal are/is generated in the presence of an unsafe operating condition.

30. Arrangement according to claim 29, **characterised in that** the warning signal is generated on a capacitor-specific, capacitor-group-specific or module-related basis.

31. Arrangement according to one of the preceding claims, **characterised in that** upon detecting a short circuit the safety device reduces the permitted upper voltage limit of the capacitor module.

32. Arrangement according to one of the preceding claims, **characterised in that** the energy during the discharging of the capacitors is fed into a braking resistor (400) of the drive device (300).

33. Arrangement according to one of the preceding claims 1 to 31, **characterised in that** the energy during the discharging of the capacitors is used for recharging onboard batteries of the rail vehicle.

34. Arrangement according to one of the preceding claims, **characterised in that** a plurality of capacitor modules are connected in series and/or in parallel and are monitored by the safety device (50).

35. Arrangement according to one of the preceding claims 1 to 33, **characterised in that** a plurality of capacitor modules are connected in series and/or in parallel and in each case are monitored by an individually assigned safety device.

36. Method for operating a capacitor module (20) comprising at least one capacitor (30), wherein the operating condition of the capacitor (30) or the operating condition of the capacitor module (20) is monitored and a switching action triggered if an unsafe operating condition is detected, **characterised in that** the capacitor module is switched to a safety mode of operation in which the current that flows away from and to the capacitor module (20) is limited.

## Revendications

1. Agencement ( 10 ) comprenant un module ( 20 ) de condensateurs ayant au moins un condensateur ( 30 ), l'agencement ayant un dispositif ( 50 ) de sécurité en liaison avec le au moins un condensateur, qui contrôle l'état de fonctionnement du condensateur ( 30 ) ou l'état de fonctionnement du module ( 20 ) de condensateur et qui, dans le cas d'un état de fonctionnement reconnu comme peu sûr, déclenche une opération de commutation, **caractérisé en ce que** le dispositif ( 50 ) de sécurité se met dans un mode de fonctionnement en sécurité, en étant à cet effet relié à un dispositif ( 110 ) de limitation du courant, qui part du module ( 20 ) de condensateur et qui y va.

2. Agencement suivant la revendication 1, **caractérisé en ce que** le dispositif de sécurité est tel que, dans le mode de fonctionnement en sécurité, il limite la puissance du condensateur.

3. Agencement suivant la revendication 1, **caractérisé en ce que** le dispositif de sécurité est tel que, dans le mode de fonctionnement en sécurité, il découple électriquement le condensateur.

4. Module de condensateurs suivant la revendication 3, **caractérisé en ce que** le condensateur est déchargé complètement pendant le mode de fonctionnement en sécurité.

5. Agencement suivant l'une des revendications précédentes, **caractérisé en ce que** le module de condensateurs est en liaison avec un système ( 300 ) d'entraînement, notamment d'un véhicule ferroviaire.

6. Agencement suivant l'une des revendications précédentes, **caractérisé en ce que** le module de condensateurs a plusieurs condensateurs ( 30 ), qui sont en liaison respectivement avec le dispositif de sécurité et qui en sont contrôlés.

7. Agencement suivant l'une des revendications précédentes, **caractérisé en ce que** le module de condensateurs est un module de condensateurs à couche double et les condensateur qui y sont contenus sont des condensateurs à couche double.

8. Agencement suivant l'une des revendications précédentes, **caractérisé en ce que** le module de condensateurs à couche double est un module fermé d'une manière étanche au gaz.

9. Agencement suivant l'une des revendications précédentes, **caractérisé en ce que** le dispositif de sécurité contrôle continuellement la température à l'intérieur du module de condensateurs et, si une température maximum prévue est dépassée, fait débuter le mode de fonctionnement en sécurité.

10. Agencement suivant la revendication 9, **caractérisé en ce que** le dispositif de sécurité contrôle la température à l'intérieur d'au moins un condensateur du module de condensateurs, de préférence à l'intérieur de tous les condensateurs du module de condensateurs et, si une température maximum prévue est dépassée, fait débuter le mode de fonctionnement en sécurité.

11. Agencement suivant l'une des revendications précédentes, **caractérisé en ce que** le dispositif de sécurité contrôle la pression à l'intérieur du module de condensateurs et, si une pression maximum prescrite est dépassée, déclenche le mode de fonctionnement en sécurité.

12. Agencement suivant la revendication 11, **caractérisé en ce que** le dispositif de sécurité contrôle continuellement la pression à l'intérieur d'au moins un condensateur du module de condensateurs, de préférence à l'intérieur de tous les condensateurs du module de condensateurs et, si une pression maximum prescrite est dépassée, déclenche le mode de fonctionnement en sécurité.

13. Agencement suivant l'une des revendications précédentes, **caractérisé en ce que** le dispositif de sécurité comprend ( 70 ) un capteur, qui détecte de l'électrolyte sortant du au moins un condensateur et qui, si un électrolyte sort, fait débuter le mode de fonctionnement en sécurité.

14. Agencement suivant la revendication 13, **caractérisé en ce que** le capteur est un capteur de conductibilité, un capteur capacitif ou un capteur chimique, qui est sensible notamment à un solvant sous forme de vapeur ou sous forme de liquide contenu dans l'électrolyte.

15. Agencement suivant l'une des revendications précédentes, **caractérisé en ce que** le dispositif de sécurité comporte un dispositif ( 130 ) de mesure de la dilatation mesurant la dilatation dans l'espace du au moins un condensateur ou la dilatation dans l'espace du module de condensateurs et le dispositif de sécurité est tel que, si une valeur de mesure de dilatation maximum prescrite est dépassée, il fait débuter le mode de fonctionnement en sécurité.

16. Agencement suivant la revendication 15, **caractérisé en ce que** le dispositif de mesure de la dilatation est relié à au moins une jauge ( 200 à 230 ) de contrainte, qui entoure complètement le boîtier du condensateur associé.

17. Agencement suivant la revendication 16, **caractérisé en ce que** le dispositif de mesure de la dilatation comprend respectivement au moins une jauge de contrainte pour chaque condensateur du module de condensateurs.

18. Agencement suivant la revendication 16 ou 17, **caractérisé en ce que** les jauges de contrainte sont disposées respectivement à mi-hauteur du boîtier de condensateur associé.

19. Agencement suivant l'une des revendications précédentes, **caractérisé en ce que** le dispositif sécurité détermine à des intervalles réguliers la résistance intérieure et/ou la capacité du module de condensateurs, la compare à des valeurs limite prescrites et fait débuter le mode de fonctionnement en sécurité, si les valeurs de mesure dépassent les valeurs limite prescrites.

20. Agencement suivant la revendication 19, **caractérisé en ce que** le dispositif de sécurité compare les valeurs de la résistance et/ou de la capacité mesurée respectivement à des valeurs de la résistance et/ou de la capacité mémorisées de périodes de fonctionnement antérieures et détermine, à partir de ce résultat de comparaison, une grandeur ( ST6 ) caractéristique qui caractérise l'état technique du module de condensateurs.

21. Agencement suivant la revendication 20, **caractérisé en ce que** le dispositif de sécurité produit une grandeur caractéristique qui indique 1' "état de santé" du module de condensateurs.

22. Agencement suivant l'une des revendications précédentes, **caractérisé en ce que** le dispositif de sécurité comprend au moins une soupape ( 100 ) de sécurité, qui s'ouvre dans le cas d'une surpression à l'intérieur du module de condensateurs.

23. Agencement suivant l'une des revendications précédentes, **caractérisé en ce que** le dispositif de sécurité mesure des courants électriques de fuite des condensateurs et, si des courants de fuite limites prescrits sont dépassés, fait débuter le mode de fonctionnement en sécurité.

24. Agencement suivant la revendication 23, **caractérisé en ce que** le dispositif de sécurité effectue la détection du courant de fuite à la fin de chaque phase de fonctionnement en tant que partie de l'opération respective d'arrêt et/ou dans des temps de repos prescrits.

25. Agencement suivant l'une des revendications précédentes, **caractérisé en ce que** le dispositif de sécurité comprend un dispositif de détection de court-circuit, qui contrôle la présence d'un court-circuit sur les condensateurs et qui, s'il se produit un court-circuit, fait débuter le mode de fonctionnement en sécurité.

26. Agencement suivant la revendication 25, **caractérisé en ce que** le dispositif de détection de court-circuit effectue le contrôle de court-circuit respectivement à la fin de chaque phase de fonctionnement en tant que partie du programme d'arrêt et/ou dans des temps de repos prescrits.

27. Agencement suivant l'une des revendications précédentes, **caractérisé en ce que** le module de condensateurs a un type de fonctionnement en repos, dans lequel la tension du module est abaissée jusqu'à ce que les tensions individuelles de cellule des condensateurs contenus dans le module soit respectivement inférieure à 2,2 V.

28. Agencement suivant l'une des revendications précédentes, **caractérisé en ce que** le dispositif de sécurité sépare électriquement, en présence du mode de fonctionnement en sécurité, les condensateurs par un dispositif ( 160 ) de commutation disposé à l'intérieur du boîtier du module de condensateurs ou à l'extérieur du boîtier du module de condensateurs.

29. Agencement suivant l'une des revendications précédentes, **caractérisé en ce que** le dispositif de sécurité comprend un dispositif ( 140 ) d'émission, par lequel il est produit, en présence d'un état de fonctionnement peu sûr, un signal d'avertissement acoustique et/ou visuel.

30. Agencement suivant la revendication 29, **caractérisé en ce que** le signal d'avertissement est produit individuellement pour un condensateur, individuellement pour un groupe de condensateurs ou se rapporte au module.

31. Agencement suivant l'une des revendications précédentes, **caractérisé en ce que** le dispositif de sécurité réduit, lorsqu'il détecte un court-circuit, la limite de tension supérieure admissible du module de condensateurs.

32. Agencement suivant l'une des revendications précédentes, **caractérisé en ce que** l'énergie, lors de la décharge des condensateurs, est injectée dans une résistance ( 400 ) de freinage du dispositif ( 300 ) d'entraînement.

33. Agencement suivant l'une des revendications 1 à 31 précédentes, **caractérisé en ce que** l'énergie, lors de la décharge des condensateurs, est utilisée pour recharger des batteries de bord du véhicule ferroviaire.

34. Agencement suivant l'une des revendications précédentes, **caractérisé en ce que** plusieurs modules de condensateurs sont montés en série et/ou en parallèle et sont contrôlés par le dispositif ( 50 ) de sécurité.

35. Agencement suivant l'une des revendications 1 à 33 précédentes, **caractérisé en ce que** plusieurs modules de condensateurs sont montés en série et/ou en parallèle et sont contrôlés respectivement par un dispositif de sécurité qui leur est affecté individuellement.

36. Procédé pour faire fonctionner un module ( 20 ) de condensateurs ayant au moins un condensateur ( 30 ), l'état de fonctionnement du condensateur ( 30 ) ou l'état de fonctionnement du module ( 20 ) de condensateurs étant contrôlé et, si un état de fonctionnement est détecté comme peu sûr, une opération de commutation étant déclenchée, **caractérisé en ce que** l'on met le module de condensateurs dans un mode de fonctionnement en sécurité, dans lequel le courant qui sort du module ( 20 ) de condensateurs et qui y va, est limité.
